# EUROPÄISCHE PATENTSCHRIFT

(11) **EP 2 861 101 B1**
(45) Veröffentlichungstag und Bekanntmachung des Hinweises auf die Patenterteilung: **02.08.2017**
(21) Anmeldenummer: 13730157.8
(22) Anmeldetag: 11.06.2013
(51) Int. Cl.: A46B 13/00, A46B 13/06, B08B 1/04, B08B 1/00, B08B 3/02, F24J 2/46

(54) **REINIGUNGSVORRICHTUNG FÜR PHOTOVOLTAIKANLAGEN**
CLEANING DEVICE FOR PHOTOVOLTAIC INSTALLATIONS
DISPOSITIF DE NETTOYAGE POUR INSTALLATIONS PHOTOVOLTAÏQUES

(30) Priorität: 15.06.2012 DE 102012105232
(43) Veröffentlichungstag der Anmeldung: 22.04.2015
(73) Patentinhaber: Alfred Kärcher GmbH & Co. KG, 71364 Winnenden (DE)
(72) Erfinder: WEISS, Benjamin, 71364 Winnenden (DE); HOLZWARTH, Wolfgang, 73635 Rudersberg (DE)
(74) Vertreter: Hoeger, Stellrecht & Partner Patentanwälte mbB
(86) Internationale Anmeldenummer: PCT/EP2013/061992
(87) Internationale Veröffentlichungsnummer: WO 2013/186197

(56) Entgegenhaltungen:
- DE-A1- 19 838 072
- DE-A1-102011 103 161
- DE-U1-202007 001 488
- DE-U1-202009 008 001
- GB-A- 2 327 338
- US-A- 6 158 678
- US-A1- 2002 190 145
- "Teleskopstangen für Ihre PV und Solarreinigung", , 27. April 2012 (2012-04-27), Seiten 1-10, XP055077193, Gefunden im Internet: URL:http://web.archive.org/web/20120427222 546/http://www.sunclex.com/produkte-shop/t eleskopstangen [gefunden am 2013-08-30]

## Beschreibung

Die Erfindung betrifft eine Reinigungsvorrichtung für Photovoltaikanlagen umfassend einen Reinigungskopf mit mindestens einer Scheibenbürste, die eine um eine Drehachse drehbare Borstenscheibe aufweist, an der Reinigungsborsten angeordnet sind, und mit einer Antriebseinrichtung, die ein drehbar gelagertes Turbinenrad umfasst, das mit unter Druck stehender Reinigungsflüssigkeit beaufschlagbar ist und das über ein Getriebe mit der Borstenscheibe gekoppelt ist.

Derartige Reinigungsvorrichtungen sind aus der DE 20 2009 008 001 U1 bekannt. Mit ihrer Hilfe kann eine Photovoltaikanlage gereinigt werden. Derartige Photovoltaikanlagen werden häufig auf Gebäudedächern montiert und unterliegen permanent Witterungs- und Umwelteinflüssen. Dies kann zu einer Verschmutzung der Photovoltaikanlagen führen, durch die deren Wirkungsgrad beeinträchtigt wird. In der DE 20 2009 008 001 U1 wird vorgeschlagen, die Photovoltaikanlagen mittels einer Reinigungsvorrichtung zu reinigen, die bevorzugt zwei Scheibenbürsten aufweist. Die Scheibenbürsten umfassen jeweils ein Turbinenrad, das mit unter Druck stehender Reinigungsflüssigkeit beaufschlagt werden kann und das mit einer Borstenscheibe gekoppelt ist, an der Reinigungsborsten angeordnet sind. Die Reinigungsflüssigkeit dient zum einen dazu, die Borstenscheiben der Scheibenbürsten in Drehung zu versetzen und zum anderen kann die Oberfläche der Photovoltaikanlagen mittels der Reinigungsflüssigkeit gereinigt werden, wobei die Oberfläche gleichzeitig mittels der Reinigungsborsten mechanisch bearbeitet wird.

Um die Borstenscheiben an den Photovoltaikanlagen entlangzuführen, kommt bei der aus DE 20 2009 008 001 U1 bekannten Reinigungsvorrichtung ein zentrales Tragteil zum Einsatz, an dem hintereinander zwei Räder drehbar gelagert sind. An dem zentralen Tragteil sind die beiden Scheibenbürsten gehalten. Um die Reinigungsvorrichtung an der Photovoltaikanlage entlang zu führen, können die hinter einander angeordneten Räder mit Führungselementen der Photovoltaikanlage zusammenwirken, beispielsweise mit Nuten, in die die Räder eingesetzt werden. Dadurch ist sichergestellt, dass die Reinigungsvorrichtung beim Bewegen nicht seitlich ausweicht. Nachteilig bei der aus DE 20 2009 008 001 U1 bekannten Reinigungsvorrichtung ist es, dass sie zu ihrer Führung zusätzliche Führungselemente der Photovoltaikanlage benötigt.

In der Veröffentlichung "Teleskopstangen für Ihre PV und Solarreinigung", datiert vom 27. April 2012, wird zur Reinigung einer Photovoltaikanlage der Einsatz einer Teleskopstange vorgeschlagen, die an ihrem freien Ende eine Reinigungsbürste trägt. Die Teleskopstange weist ein- und ausfahrbare Teleskopelemente auf, so dass sie in ihrer Länge verändert werden kann.

Aufgabe der vorliegenden Erfindung ist es, eine Reinigungsvorrichtung der eingangs genannten Art derart weiterzubilden, dass sie auf einfachere Weise an einer Photovoltaikanlage entlang geführt werden kann und eine hohe mechanische Belastbarkeit aufweist.

Diese Aufgabe wird durch eine Reinigungsvorrichtung mit den Merkmalen von Patentanspruch 1 gelöst.

Bei der erfindungsgemäßen Reinigungsvorrichtung ist der Reinigungskopf an einer teleskopierbaren Führungseinrichtung gehalten, d. h. an einer Führungseinrichtung, die in ihrer Länge veränderlich ist. Dies gibt dem Benutzer die Möglichkeit, den Reinigungskopf mittels der Führungseinrichtung an der zu reinigenden Photovoltaikanlage entlangzuführen, wobei er die Länge der Führungseinrichtung verändern kann. Zusätzliche Führungselemente der Photovoltaikanlage können deshalb entfallen. Die Führungseinrichtung dient außerdem dazu, der mindestens einen Scheibenbürste die unter Druck stehende Reinigungsflüssigkeit, vorzugsweise Wasser, zuzuführen. Die Reinigungsflüssigkeit kann beispielsweise durch die Führungseinrichtung hindurch zu der mindestens einen Scheibenbürste strömen und dessen Turbinenrad beaufschlagen, so dass mittels der Reinigungsflüssigkeit das Turbinenrad und die Borstenscheibe in Drehung versetzt werden können. Ein zusätzlicher Antriebsmotor, insbesondere ein Elektromotor, für den Reinigungskopf kann entfallen. Dies verringert das Gewicht des Reinigungskopfes und erleichtert in Kombination mit der teleskopierbaren Führungseinrichtung die Handhabung der Reinigungsvorrichtung.

Wie bereits erwähnt, weist der Reinigungskopf mindestens eine Scheibenbürste auf, die eine Antriebseinrichtung umfasst. Mittels der Antriebseinrichtung kann die Borstenscheibe um ihre Drehachse in Drehung versetzt werden. Erfindungsgemäß weist die mindestens eine Scheibenbürste ein Antriebsgehäuse auf, in dem das Turbinenrad drehbar gelagert ist, und die Borstenscheibe ist an einem vorzugsweise plattenförmig ausgestalteten Halteteil gehalten, das über ein Wälzlager am Antriebsgehäuse drehbar gelagert ist. Dem Antriebsgehäuse kann unter Druck stehende Reinigungsflüssigkeit zugeführt werden, die auf das im Antriebsgehäuse drehbar gelagerte Turbinenrad gerichtet werden kann, so dass dieses unter der Einwirkung der unter Druck stehenden Reinigungsflüssigkeit in Drehung versetzt wird. Das Turbinenrad ist über ein Getriebe mit dem Halteteil gekoppelt, an dem die Borstenscheibe drehfest gehalten ist. Das Halteteil kann zusammen mit der Borstenscheibe vom Turbinenrad in Drehung versetzt werden. Die Lagerung des Halteteils am Antriebsgehäuse erfolgt mit Hilfe eines Wälzlagers. Der Einsatz eines Wälzlagers verleiht der Reinigungsvorrichtung eine besonders hohe mechanische Stabilität und hat darüber hinaus den Vorteil, dass Reibungskräfte zwischen dem Halteteil und dem Antriebsgehäuse gering gehalten werden können. Darüber hinaus hat der Einsatz eines Wälzlagers den Vorteil, dass Fertigungstoleranzen des vorzugsweise aus einem oder mehreren Kunststoffmaterialien hergestellten Antriebsgehäuses ebenso wie Fertigungstoleranzen des günstigerweise ebenfalls aus einem oder mehreren Kunststoffmaterialien gefertigten Halteteils auf einfache Weise ausgeglichen werden können.

Das Halteteil weist ein innenverzahntes Hohlrad auf, das mit einem Ritzel des Getriebes kämmt. Das Ritzel ist vorzugsweise um eine Getriebeachse drehbar, die parallel zur Drehachse des Turbinenrades ausgerichtet ist.

Eine besonders hohe mechanische Belastbarkeit der erfindungsgemäßen Reinigungsvorrichtung wird dadurch erzielt, dass das Wälzlager das Hohlrad umgibt. Das Wälzlager kann somit einen verhältnismäßig großen Durchmesser aufweisen und dadurch auch beträchtliche Kippmomente, die bei Einsatz der Reinigungsvorrichtung auftreten können, zuverlässig von der Borstenscheibe über das Halteteil auf das Antriebsgehäuse übertragen, ohne dass dadurch die Lagerung der Borstenscheibe beeinträchtigt wird.

Die Führungseinrichtung weist bei einer vorteilhaften Ausführungsform der Erfindung starre, ineinandersteckbare Führungsstangen auf. Die Führungsstangen bilden eine starre Halterung für den Reinigungskopf. Darüber hinaus kann durch die Führungsstangen hindurch dem Reinigungskopf die unter Druck stehende Reinigungsflüssigkeit zugeführt werden.

Bei einer bevorzugten Ausgestaltung ist vorgesehen, dass eine Zuführungsleitung für unter Druck stehende Reinigungsflüssigkeit, vorzugsweise ein Zuführungsschlauch, durch die Führungseinrichtung hindurchgeführt ist. Als Zuführungsleitung kommt vorzugsweise ein Hochdruckschlauch zum Einsatz, der an den Druckauslass eines Hochdruckreinigungsgerätes angeschlossen ist und über den die mindestens eine Scheibenbürste des Reinigungskopfs mit unter Druck stehender Reinigungsflüssigkeit versorgt werden kann.

Zwischen der Führungseinrichtung und dem Reinigungskopf ist bei einer besonders bevorzugten Ausgestaltung der Erfindung ein Bürstenhalter angeordnet, an dem die mindestens eine Scheibenbürste - vorzugsweise lösbar - gehalten ist.

Der Bürstenhalter kann beispielsweise in Form eines Rohrleitungsabschnittes ausgebildet sein, der einerseits mit dem dem Reinigungskopf zugewandten Ende der Führungseinrichtung und andererseits mit der mindestens einen Scheibenbürste des Reinigungskopfes in Strömungsverbindung steht.

Von besonderem Vorteil ist es, wenn der Bürstenhalter eine Leitungsanordnung aufweist mit einem Einlass, an den eine Zuführungsleitung für unter Druck stehende Reinigungsflüssigkeit, beispielsweise ein Zuführungsschlauch, anschließbar ist, und mit mindestens einem Auslass, an den eine Scheibenbürste anschließbar ist, wobei der mindestens eine Auslass relativ zum Einlas um eine senkrecht zu einer Längsachse der Führungseinrichtung ausgerichteten Schwenkachse verschwenkbar ist. Dies hat eine weitere Vereinfachung der Handhabung der Reinigungsvorrichtung zur Folge, denn aufgrund der Schwenkbarkeit des mindestens einen Auslasses relativ zum Einlass des Bürstenhalters kann die Ausrichtung der mindestens einen Scheibenbürste relativ zu einer Längsachse der Führungseinrichtung verändert werden. Somit kann auf einfache Weise sichergestellt werden, dass sämtliche Reinigungsborsten der Scheibenbürste auch dann die Oberfläche der Photovoltaikanlage kontaktieren, wenn die Ausrichtung der Führungseinrichtung relativ zur Oberfläche der Photovoltaikanlage verändert wird. Wird der Reinigungskopf vom Benutzer mittels der Führungseinrichtung an der Photovoltaikanlage hin- und her bewegt, so kann er die Ausrichtung der Führungseinrichtung relativ zur Oberfläche der Photovoltaikanlage ändern, ohne dass dadurch die Reinigungsbürsten ihren Kontakt zur Oberfläche der Photovoltaikanlage verlieren.

Von Vorteil ist es, wenn der mindestens eine Auslass des Bürstenhalters ausgehend von einer ersten Endstellung nur in einer Schwenkrichtung um die Schwenkachse verschwenkbar ist. Vorzugsweise ist der mindestens eine Auslass in der ersten Endstellung im Wesentlichen parallel oder fluchtend zu Längsachse der Führungseinrichtung ausgerichtet. Bei einer derartigen Ausgestaltung ist der mindestens eine Auslass des Bürstenhalters ausgehend von seiner ersten Endstellung nur in einer Schwenkrichtung um die Schwenkachse verschwenkbar. Dadurch kann sichergestellt werden, dass die Führungseinrichtung beim Hin- und Herführen des Reinigungskopfes entlang der Photovoltaikanlage nicht unbeabsichtigt die Oberfläche der Photovoltaikanlage berührt und möglicherweise beschädigt. Liegen die Reinigungsborsten der mindestens einen Scheibenbürste auf der Photovoltaikanlage auf, so kann die Führungseinrichtung bei einer derartigen Ausgestaltung der Erfindung ausgehend von einer Stellung, in der sie mit ihrer Längsachse im Wesentlichen fluchtend zu dem mindestens einen Auslass des Bürstenhalters ausgerichtet ist, nur in die der Photovoltaikanlage abgewandte Richtung um die Schwenkachse des Bürstenhalters verschwenkt werden. Eine Beschädigung der Photovoltaikanlage durch die Führungseinrichtung wird somit zuverlässig vermieden. Günstig ist es, wenn der mindestens eine Auslass ausgehend aus der ersten Endstellung um einen Winkel von maximal 90°, insbesondere um einen Winkel von maximal 50°, beispielsweise um einen Winkel von etwa 45°, um die Schwenkachse verschwenkbar ist.

Bei einer vorteilhaften Ausführungsform weist der Bürstenhalter ein flüssigkeitsdichtes Gelenk auf, über das der Einlass mit dem mindestens einen Auslass in Strömungsverbindung steht. Das Gelenk gestattet es auf konstruktiv einfache Weise, den mindestens einen Auslass relativ zum Einlass um die Schwenkachse zu verschwenken. Darüber hinaus dient das Gelenk der Zuführung von Reinigungsflüssigkeit vom Einlass zu dem mindestens einen Auslass. Hierzu ist das Gelenk flüssigkeitsdicht ausgestaltet und bildet einen Strömungsweg aus, so dass die unter Druck stehende Reinigungsflüssigkeit durch das Gelenk hindurchströmen kann.

Das Halteteil ist bei einer bevorzugten Ausgestaltung der Erfindung um die Drehachse des Turbinenrads drehbar.

Das Wälzlager ist günstigerweise als Kugellager ausgebildet.

Von besonderem Vorteil ist es, wenn das Wälzlager als Axiallager ausgebildet ist. Dies gibt die Möglichkeit, bei Einsatz der Reinigungsvorrichtung auftretende Axialkräfte von der Borstenscheibe über das Halteteil und das Axiallager auf das Antriebsgehäuse zu übertragen. Dies verleiht der Reinigungsvorrichtung eine besonders große mechanische Stabilität.

Günstig ist es, wenn das mit der Innenverzahnung des Hohlrades kämmende Ritzel drehfest mit einem Zahnrad verbunden ist, das im Antriebsgehäuse drehbar gelagert ist und das mit einem drehfest mit dem Turbinenrad verbundenen Ritzel kämmt.

Das mit dem Turbinenrad verbundene Ritzel ist günstigerweise einstückig mit einer Turbinenradscheibe verbunden, an der eine Vielzahl von Turbinenschaufeln angeordnet sind, die von unter Druck stehender Reinigungsflüssigkeit beaufschlagt werden können.

Eine weitere Vereinfachung der Handhabung der Reinigungsvorrichtung wird bei einer bevorzugten Ausgestaltung der Erfindung dadurch erzielt, dass der Reinigungskopf zwei Scheibenbürsten aufweist, deren Borstenscheiben in einander entgegengesetzte Richtungen drehbar sind. Die Borstenscheiben sind somit gegenläufig drehbar. Dies erleichtert es, die Reinigungsvorrichtung an einer zu reinigenden Photovoltaikanlage entlangzuführen, denn aufgrund der gegenläufigen Bewegung der beiden Borstenscheiben wird die Gefahr verringert, dass die Reinigungsvorrichtung eine unbeabsichtigte seitliche Bewegung ausführt.

Die beiden Scheibenbürsten sind günstigerweise im Wesentlichen identisch ausgebildet und unterscheiden sich lediglich dadurch, dass das jeweilige Turbinenrad an unterschiedlichen Seiten bezogen auf die jeweilige Drehachse mit unter Druck stehender Reinigungsflüssigkeit beaufschlagt wird. Aufgrund der unterschiedlichen Flüssigkeitsbeaufschlagung führen die Turbinenräder eine gegenläufige Drehbewegung aus, die über das jeweilige Getriebe auf die Borstenscheibe übertragen wird, so dass auch letztere durch die unterschiedliche Flüssigkeitsbeaufschlagung der Turbinenräder in einander entgegengesetzte Richtungen gedreht werden.

Die nachfolgende Beschreibung einer bevorzugten Ausführungsform der Erfindung dient im Zusammenhang mit der Zeichnung der näheren Erläuterung. Es zeigen:
- Figur 1:: eine schematische Darstellung einer erfindungsgemäßen Reinigungsvorrichtung bei der Reinigung einer auf dem Dach eines Gebäudes angeordneten Photovoltaikanlage;
- Figur 2:: eine schematische Draufsicht auf einen Reinigungskopf der Photovoltaikanlage aus Figur 1;
- Figur 3:: eine Schnittansicht einer Scheibenbürste des Reinigungskopfes entlang der Linie 3-3 in Figur 2;
- Figur 4:: eine Schnittansicht der Scheibenbürste entlang der Linie 4-4 in Figur 3;
- Figur 5:: eine Schnittansicht der Scheibenbürste entlang der Linie 5-5 in Figur 3;
- Figur 6:: eine Schnittansicht eines Bürstenhalters entlang der Linie 6-6 in Figur 7, und
- Figur 7:: eine Schnittansicht des Bürstenhalters entlang der Linie 7-7 in Figur 6.

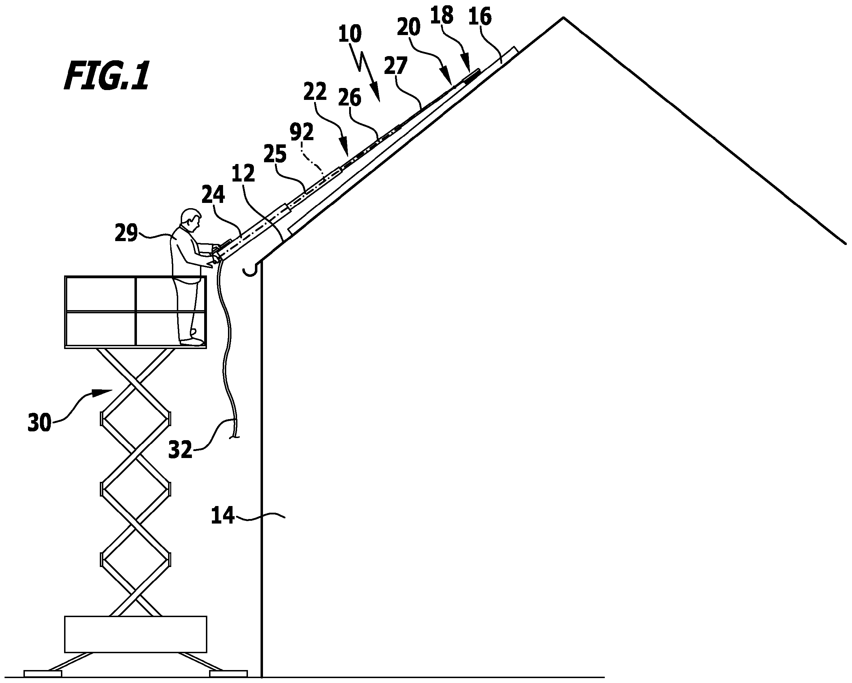

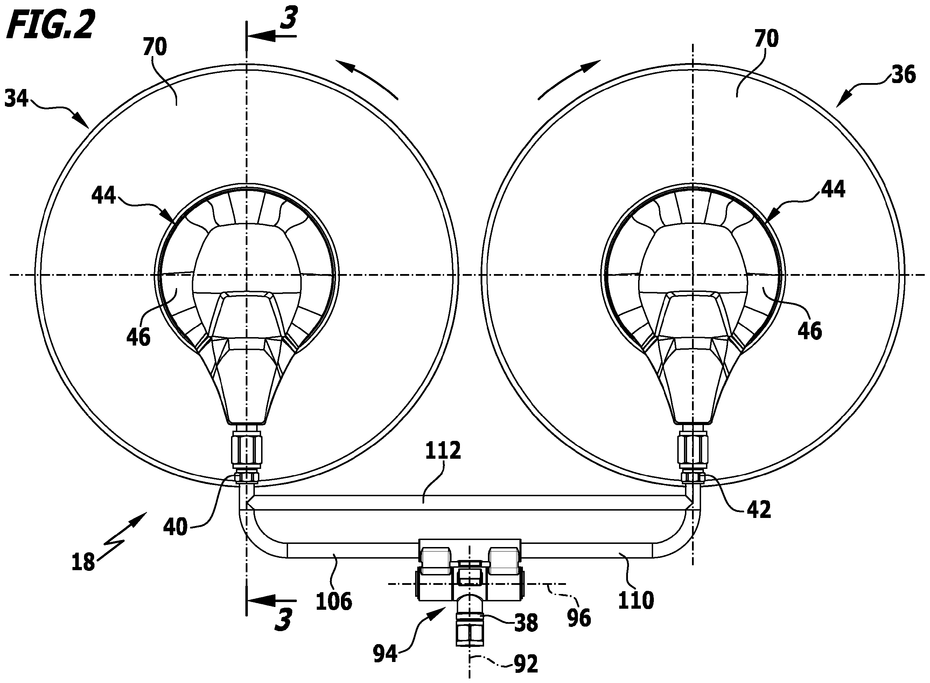

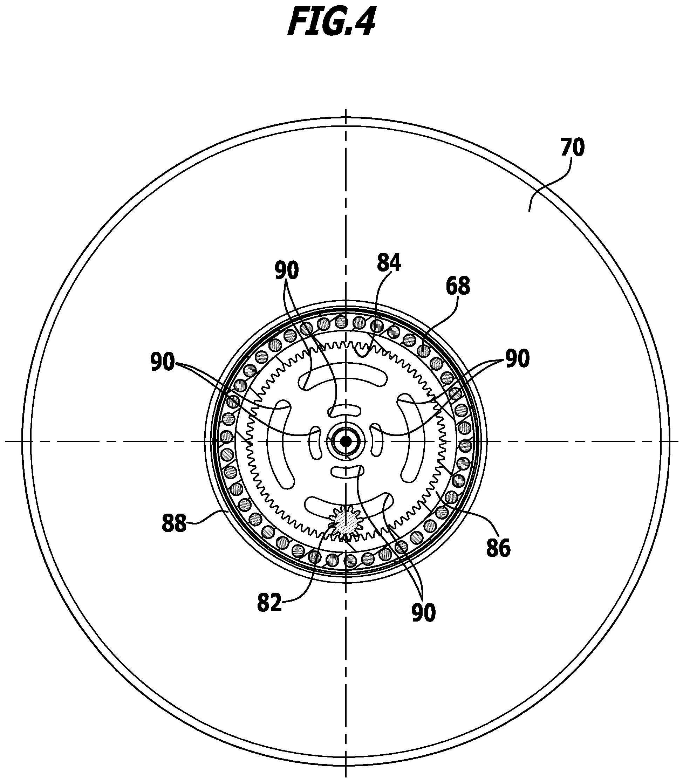

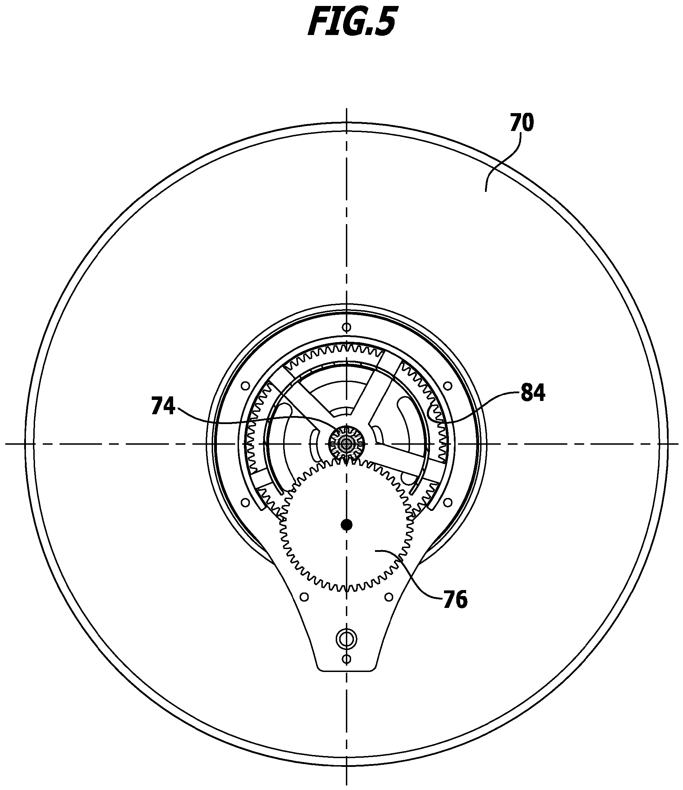

In Figur 1 ist schematisch die Verwendung einer erfindungsgemäßen Reinigungsvorrichtung 10 dargestellt, deren konstruktiver Aufbau sich insbesondere aus den Figuren 2 bis 6 ergibt. Mittels der Reinigungsvorrichtung 10 kann beispielsweise eine auf einem Dach 12 eines Gebäudes 14 montierte Photovoltaikanlage 16 gereinigt werden. Die Reinigungsvorrichtung 10 umfasst einen Reinigungskopf 18, der über einen Bürstenhalter 20 an einer teleskopierbaren Führungseinrichtung 22 gehalten ist. Letztere weist mehrere starre, ineinandersteckbare Führungsstangen 24, 25, 26, 27 auf und kann an ihrem dem Reinigungskopf 18 abgewandten Ende eine Haltevorrichtung ausweisen, die von einem Benutzer 29 ergriffen werden kann. Der Benutzer 29 kann beispielsweise eine Position auf einer Hubbühne 30 einnehmen und kann den Reinigungskopf 18 mittels der Führungseinrichtung 22 entlang der Photovoltaikanlage 16 hin- und her bewegen. Durch die Führungsstangen 24, 25, 26, 27 der Führungseinrichtung 22 ist eine Zuführungsleitung in Form eines Zuführungsschlauches 32 hindurchgeführt, der mit seinem dem Reinigungskopf 18 zugewandten Ende an den Bürstenhalter 20 und mit seinem in der Zeichnung nicht dargestellten, dem Reinigungskopf 18 abgewandten Ende beispielsweise an den Druckauslass eines an sich bekannten und deshalb in der Zeichnung zur Erzielung einer besseren Übersicht ebenfalls nicht dargestellten Hochdruckreinigungsgerätes angeschlossen ist. Über den Zuführungsschlauch 32 und den Bürstenhalter 20 kann der Reinigungskopf 18 mit unter Druck stehender Flüssigkeit versorgt werden. Wie nachfolgend noch näher erläutert wird, dient die unter Druck stehende Reinigungsflüssigkeit zum einen dazu, die Borstenscheiben zweier Scheibenbürsten des Reinigungskopfes 18 in einander entgegengesetzte Richtungen in Drehung zu versetzen, und zum anderen dient die Reinigungsflüssigkeit der Reinigung der Photovoltaikanlage 10, indem sie über die Scheibenbürsten praktisch ohne Druck auf die Photovoltaikanlage aufgebracht werden kann.

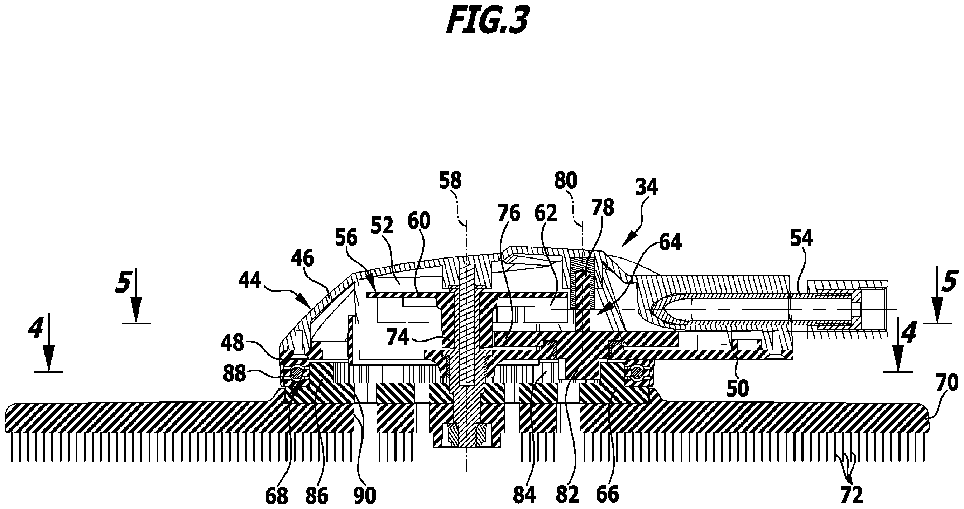

Der Reinigungskopf 18 ist in Figur 2 schematisch dargestellt. Er umfasst eine erste Scheibenbürste 34 und eine zweite Scheibenbürste 36. Die zweite Scheibenbürste 36 ist praktisch identisch ausgestaltet wie die erste Scheibenbürste 34. Zur Vermeidung von Wiederholungen wird nachfolgend lediglich die erste Scheibenbürste 34 unter Bezugnahme auf die Figuren 3, 4 und 5 im Einzelnen erläutert. Die entsprechenden Erläuterungen gelten jedoch in gleicher Weise auch für die zweite Scheibenbürste 36.

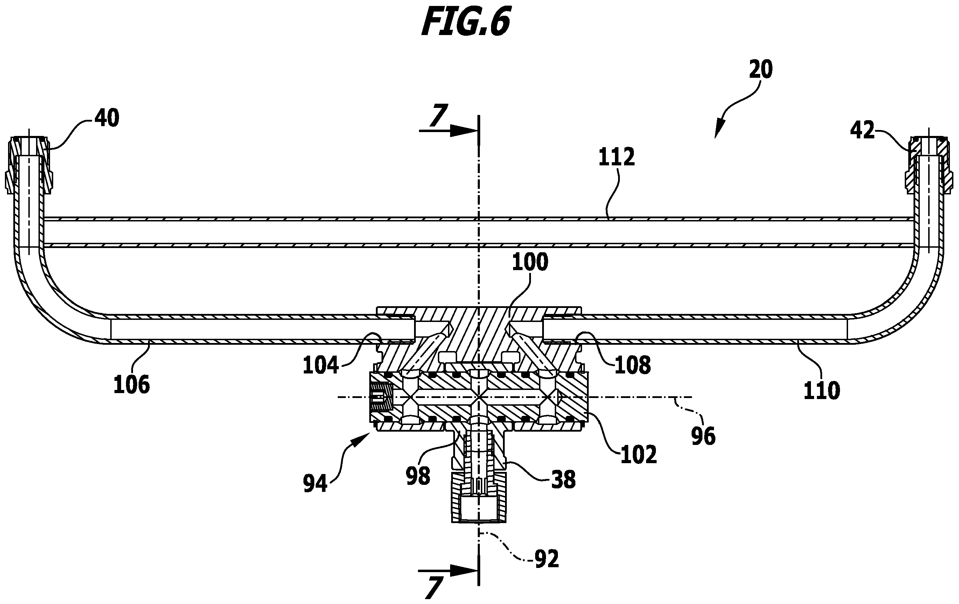

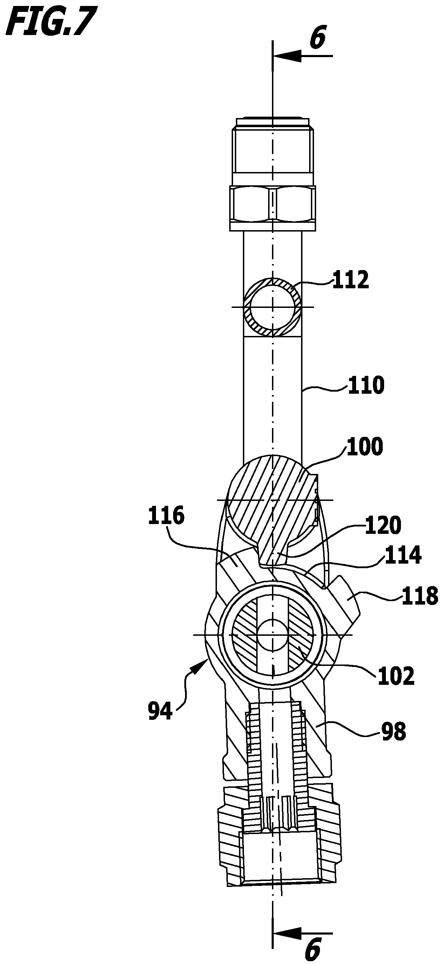

Die beiden Scheibenbürsten 34, 36 sind an den Bürstenhalter 20 angeschlossen. Der Bürstenhalter 20 bildet eine Leitungsanordnung aus, über die die Scheibenbürsten 34, 36 mit unter Druck stehender Reinigungsflüssigkeit versorgt werden können. Der Bürstenhalter 20 ist in den Figuren 6 und 7 schematisch dargestellt. Er umfasst einen Einlass 38, an den das freie Ende des durch die Führungsstangen 24 bis 27 hindurchgeführten Zuleitungsschlauches 32 angeschlossen werden kann, sowie einen ersten Auslass 40, an den die erste Scheibenbürste 34 angeschlossen ist, und einen zweiten Auslass 42, an den die zweite Scheibenbürste 36 angeschlossen ist.

Die beiden Scheibenbürsten 34, 36 weisen jeweils ein Antriebsgehäuse 44 auf mit einem Gehäuseoberteil 46, das nach Art einer Haube ausgebildet ist, und mit einem Gehäuseunterteil 48, das eine Bodenplatte 50 ausbildet. Das Antriebsgehäuse 44 umgibt einen Antriebsraum 52, in den ein Anschlussrohr 54 einmündet und in dem ein Turbinenrad 56 um eine Drehachse 58 drehbar gelagert ist. Das Turbinenrad 56 weist eine Turbinenscheibe 60 auf, an deren der Bodenplatte 50 zugewandter Unterseite mehrere Turbinenschaufeln 62 angeordnet sind. Das Anschlussrohr 54 der ersten Scheibenbürste 34 kann an den ersten Auslass 40 des Bürstenhalters 20 angeschlossen werden. In gleicher Weise kann das Anschlussrohr 54 der zweiten Scheibenbürste 36 an den zweiten Auslass 42 des Bürstenhalters 20 angeschlossen werden. Über das Anschlussrohr 54 können die Turbinenschaufeln 62 des Turbinenrades 56 mit unter Druck stehender Reinigungsflüssigkeit beaufschlagt werden, so dass das Turbinenrad 56 um die Drehachse 58 in Drehung versetzt wird. Durch entsprechende Ausrichtung der Anschlussrohre 54 der beiden Schreibenbürsten 34 und 36 ist die Drehrichtung des Turbinenrades 56 der ersten Scheibenbürste 34 der Drehrichtung des Turbinenrades 56 der zweiten Scheibenbürste 36 entgegengerichtet.

Das Turbinenrad 56 ist über ein Getriebe 64 mit einem Halteteil in Form einer Antriebsscheibe 66 gekoppelt, die um die Drehachse 58 drehbar an der dem Antriebsraum 52 abgewandten Unterseite der Bodenplatte 50 gelagert ist. Die Lagerung der Antriebsscheibe erfolgt mit Hilfe eines Wälzlagers in Form eines Kugellagers 68, das ein Axiallager ausbildet. An der dem Antriebsgehäuse abgewandten Unterseite der Antriebsscheibe 66 ist eine Borstenscheibe 70 lösbar und drehfest gehalten, die zusammen mit der Antriebsscheibe 66 um die Drehachse 58 drehbar ist und die auf ihrer dem Antriebsgehäuse 44 abgewandten Unterseite eine Vielzahl von Reinigungsborsten 72 trägt.

Das Getriebe 64 umfasst ein erstes Ritzel 74, das koaxial zum Turbinenrad 56 ausgerichtet und drehfest mit diesem verbunden ist und das mit einem Zahnrad 76 kämmt, welches drehfest an einer Welle 78 gehalten ist, die im Antriebsgehäuse 54 um eine parallel zur Drehachse 58 ausgerichtete Getriebeachse 80 drehbar gelagert ist. Die Welle 78 durchgreift eine Öffnung der Bodenplatte 50 und ragt aus dem Antriebsraum 52 heraus. In ihrem aus dem Antriebsraum 52 herausragenden Bereich trägt die Welle 78 ein zweites Ritzel 82, das mit einer Innenverzahnung 84 eines Hohlrades 86 kämmt. Das Hohlrad 86 ist drehfest und vorzugsweise einstückig mit der Antriebsscheibe 66 verbunden und vom Kugellager 68 umgeben. Das Kugellager 68 wiederum ist von einem Kragen 88 umgeben, der von der dem Antriebsraum 52 abgewandten Unterseite der Bodenplatte 50 absteht.

Die Bodenplatte 50 weist ebenso wie die Antriebsscheibe 66 und die Borstenscheibe 70 mehrere Flüssigkeitsöffnungen90 auf, über die die unter Druck auf die Turbinenschaufeln 62 des Turbinenrades 56 aufgebrachte Reinigungsflüssigkeit aus dem Antriebsraum 52 praktisch drucklos herausströmen kann in den Bereich der Reinigungsborsten 72. Mittels der herausströmenden Reinigungsflüssigkeit und unter der mechanischen Wirkung der um die Drehachse 58 rotierenden Reinigungsborsten 72 kann die Photovoltaikanlage 16 wirkungsvoll gereinigt werden.

Die Drehrichtung der Borstenscheiben 70 der beiden Scheibenbürsten 34 und 36, darauf wurde bereits hingewiesen, ist gegenläufig. Dies hat eine Stabilisierung des Reinigungskopfes 18 zur Folge, so dass praktisch keine Gefahr besteht, dass der Reinigungskopf 18 beim Führen entlang der Photovoltaikanlage 16 eine unbeabsichtigte seitliche Bewegung senkrecht zur Längsachse 92 der Führungseinrichtung 22 ausführt.

Wie aus den Figuren 6 und 7 deutlich wird, umfasst der Bürstenhalter 20 ein flüssigkeitsdichtes Gelenk 94, mit dessen Hilfe die beiden Auslässe 40, 42 relativ zum Einlass 38 des Bürstenhalters 20 um eine senkrecht zur Längsachse 92 der Führungseinrichtung 22 ausgerichtete Schwenkachse 96 verschwenkt werden können. Das Gelenk 94 umfasst ein erstes Gelenkteil 98 und ein zweites Gelenkteil 100 sowie einen Gelenkbolzen 102, der die beiden Gelenkteile 98, 100 durchgreift. Das erste Gelenkteil 98 ist am Gelenkbolzen 102 drehfest gehalten, wohingegen das zweite Gelenkteil 100 um die Schwenkachse 96 drehbar am Gelenkbolzen 102 gelagert ist. Das erste Gelenkteil 98 weist den Einlass 38 des Bürstenhalters 20 auf. Das zweite Gelenkteil 100 umfasst einen ersten Ausgang 104, an den ein L-förmiges erstes Ausgangsrohr 106 angeschlossen ist, sowie einen zweiten Ausgang 108, an den ein L-förmiges zweites Ausgangsrohr 110 angeschlossen ist. Die beiden Ausgangsrohre 106 und 110 sind identisch ausgestaltet und über eine Traverse 112 starr miteinander verbunden. Das erste Ausgangsrohr 106 bildet mit seinem dem Gelenk 94 abgewandten Ende den ersten Auslass 40 des Bürstenhalters 20 und das zweite Ausgangsrohr 110 bildet mit seinem dem Gelenk 94 abgewandten Ende den zweiten Auslass 42 des Bürstenhalters 20.

Die beiden Gelenkteile 98, 100 weisen ebenso wie der Gelenkbolzen 102 eine Vielzahl von Bohrungen auf, über die Reinigungsflüssigkeit durch die Gelenkteile 98, 100 und den Gelenkbolzen 102 hindurchströmen kann.

Die Schwenkbarkeit des zweiten Gelenkteils 100 relativ zum ersten Gelenkteil 98 ist auf einen Schwenkwinkelbereich von etwa 45° beschränkt. Das erste Gelenkteil 98 weist hierzu auf seiner dem Einlass 38 gegenüberliegenden Außenseite eine Ausnehmung 114 auf, die in Schwenkrichtung des zweiten Gelenkteils 100 von einem ersten Anschlagelement 116 und einem zweiten Anschlagelement 118 begrenzt wird und in die ein Vorsprung 120 des zweiten Gelenkteils 100 eintaucht. Ausgehend von einer in Figur 7 dargestellten ersten Endstellung, in der die beiden Auslässe 40, 42 im Wesentlichen parallel zur Längsachse 92 der Führungseinrichtung 22 ausgerichtet sind, kann das zweite Gelenkteil 100 um maximal etwa 45° in eine Schwenkrichtung bis zu einer zweiten Endstellung verschwenkt werden. In der ersten Endstellung liegt der Vorsprung 120 am ersten Anschlagelement 116 an und in der zweiten Endstellung, die in der Zeichnung nicht dargestellt ist, liegt der Vorsprung 120 am zweiten Anschlagelement 118 an.

Der Einsatz des Gelenkes 94 ermöglicht es, die Ausrichtung der Führungseinrichtung 22 relativ zur Photovoltaikanlage 16 zu verändern, ohne dass dadurch die Anlage der Reinigungsborsten 72 der beiden Scheibenbürsten 34, 36 an der Photovoltaikanlage 16 beeinträchtigt wird. Dies vereinfacht das Hin- und Herbewegen des Reinigungskopfes 18 mittels der Führungseinrichtung 22 entlang der Photovoltaikanlage 16.

Die Länge der teleskopierbaren Führungseinrichtung 22 kann verändert werden, so dass der Benutzer 29 bei Bedarf einen geringeren oder größeren Abstand zur Photovoltaikanlage 16 einnehmen kann. Die veränderbare Länge der Führungseinrichtung ermöglicht es außerdem, Photovoltaikanlagen 16 mit unterschiedlicher Ausdehnung in gleicher Weise wirkungsvoll zu reinigen.

## Patentansprüche

1. Reinigungsvorrichtung für Photovoltaikanlagen umfassend einen Reinigungskopf (18) mit mindestens einer Scheibenbürste (34, 36), die eine um eine Drehachse (58) drehbare Borstenscheibe (70) aufweist, an der Reinigungsborsten (72) angeordnet sind, und mit einer Antriebseinrichtung, die ein drehbar gelagertes Turbinenrad (56) umfasst, das mit unter Druck stehenden Reinigungsflüssigkeit beaufschlagbar ist und das über ein Getriebe (64) mit der Borstenscheibe (70) gekoppelt ist, **dadurch gekennzeichnet, dass** die Reinigungsvorrichtung (10) zur Führung des Reinigungskopfes (18) eine teleskopierbare Führungseinrichtung (22) umfasst, wobei die unter Druck stehende Reinigungsflüssigkeit über die Führungseinrichtung (22) der mindestens einen Scheibenbürste (34, 36) zuführbar ist, und dass die mindestens eine Scheibenbürste (34, 36) ein Antriebsgehäuse (44) aufweist, in dem das Turbinenrad (56) drehbar gelagert ist, und dass die Borstenscheibe (70) an einem Halteteil (66) gehalten ist, das über ein Wälzlager am Antriebsgehäuse (44) drehbar gelagert ist, wobei das Halteteil (66) ein innenverzahntes Hohlrad (86) aufweist, das mit einem Ritzel (82) des Getriebes (64) kämmt, und wobei das Wälzlager das Hohlrad (86) umgibt.

2. Reinigungsvorrichtung nach Anspruch 1, **dadurch gekennzeichnet, dass** die Führungseinrichtung (22) starre, ineinander steckbare Führungsstangen (24, 25, 26, 27) aufweist.

3. Reinigungsvorrichtung nach Anspruch 1 oder 2, **dadurch gekennzeichnet, dass** eine Zuführungsleitung für unter Druck stehende Reinigungsflüssigkeit durch die Führungseinrichtung (22) hindurchgeführt ist.

4. Reinigungsvorrichtung nach einem der voranstehenden Ansprüche, **dadurch gekennzeichnet, dass** zwischen der Führungseinrichtung (22) und dem Reinigungskopf (18) ein Bürstenhalter (20) angeordnet ist, an dem die mindestens eine Scheibenbürste (34, 36) gehalten ist.

5. Reinigungsvorrichtung nach Anspruch 4, **dadurch gekennzeichnet, dass** der Bürstenhalter (20) eine Leitungsanordnung aufweist mit einem Einlass (38), an den eine Zuführungsleitung für unter Druck stehende Reinigungsflüssigkeit anschließbar ist, und mit mindestens einem Auslass (40, 42), an den eine Scheibenbürste (34, 36) anschließbar ist, wobei der mindestens eine Auslass (40, 42) relativ zum Einlass (38) um eine senkrecht zu einer Längsachse (92) der Führungseinrichtung (22) ausgerichtete Schwenkachse (96) verschwenkbar ist.

6. Reinigungsvorrichtung nach Anspruch 5, **dadurch gekennzeichnet, dass** der mindestens eine Auslass (40, 42) ausgehend von einer ersten Endstellung nur in einer Schwenkrichtung um die Schwenkachse (96) verschwenkbar ist.

7. Reinigungsvorrichtung nach Anspruch 6, **dadurch gekennzeichnet, dass** der mindestens eine Auslass (40, 42) ausgehend von der ersten Endstellung um einen Schwenkwinkel von maximal 90° um die Schwenkachse (96) verschwenkbar ist.

8. Reinigungsvorrichtung nach einem der Ansprüche 5 bis 7, **dadurch gekennzeichnet, dass** der Bürstenhalter (20) ein flüssigkeitsdichtes Gelenk (94) aufweist, über das der Einlass (38) mit dem mindestens einen Auslass (40, 42) in Strömungsverbindung steht.

9. Reinigungsvorrichtung nach einem der voranstehenden Ansprüche, **dadurch gekennzeichnet, dass** das Halteteil (66) um die Drehachse (58) des Turbinenrads (56) drehbar ist.

10. Reinigungsvorrichtung nach einem der voranstehenden Ansprüche, **dadurch gekennzeichnet, dass** das Wälzlager als Kugellager (68) ausgestaltet ist.

11. Reinigungsvorrichtung nach einem der voranstehenden Ansprüche, **dadurch gekennzeichnet, dass** das Wälzlager als Axiallager ausgestaltet ist.

12. Reinigungsvorrichtung nach einem der voranstehenden Ansprüche, **dadurch gekennzeichnet, dass** der Reinigungskopf (18) zwei Scheibenbürsten (34, 36) aufweist, deren Borstenscheiben (70) in einander entgegengesetzte Richtungen drehbar sind.

## Claims

1. Cleaning device for photovoltaic installations comprising a cleaning head (18) with at least one disc brush (34, 36) having a bristle disc (70) which is rotatable about an axis of rotation (58) and on which cleaning bristles (72) are arranged, and with a drive device comprising a rotatably mounted turbine wheel (56) which can be subjected to pressurized cleaning liquid and which is coupled by a gearing (64) to the bristle disc (70), **characterized in that** the cleaning device (10) comprises a telescopic guiding device (22) for guiding the cleaning head (18), the pressurized cleaning liquid being suppliable via the guiding device (22) to the at least one disc brush (34, 36), and **in that** the at least one disc brush (34, 36) comprises a drive housing (44) in which the turbine wheel (56) is rotatably mounted, and **in that** the bristle disc (70) is held on a holding part (66) which is rotatably mounted on the drive housing (44) by means of a roller bearing, the holding part (66) comprising an internally toothed ring gear (86) which meshes with a pinion (82) of the gearing (64), and the roller bearing surrounding the ring gear (86).

2. Cleaning device in accordance with claim 1, **characterized in that** the guiding device (22) comprises rigid guide rods (24, 25, 26, 27) which are insertable into one another.

3. Cleaning device in accordance with claim 1 or 2, **characterized in that** a supply line for pressurized cleaning liquid is led through the guiding device (22).

4. Cleaning device in accordance with any one of the preceding claims, **characterized in that** a brush holder (20), on which the at least one disc brush (34, 36) is held, is arranged between the guiding device (22) and the cleaning head (18).

5. Cleaning device in accordance with claim 4, **characterized in that** the brush holder (20) comprises a line assembly with an inlet (38) to which a supply line for pressurized cleaning liquid is connectable, and with at least one outlet (40, 42) to which a disc brush (34, 36) is connectable, the at least one outlet (40, 42) being pivotable relative to the inlet (38) about a pivot axis (96) aligned perpendicularly to a longitudinal axis (92) of the guiding device (22).

6. Cleaning device in accordance with claim 5, **characterized in that** the at least one outlet (40, 42) is pivotable from a first end position only in one pivotal direction about the pivot axis (96).

7. Cleaning device in accordance with claim 6, **characterized in that** the at least one outlet (40, 42) is pivotable from the first end position about the pivot axis (96) through a pivot angle of at most 90°.

8. Cleaning device in accordance with any one of claims 5 to 7, **characterized in that** the brush holder (20) comprises a liquid-tight joint (94) by means of which the inlet (38) is in flow communication with the at least one outlet (40, 42).

9. Cleaning device in accordance with any one of the preceding claims, **characterized in that** the holding part (66) is rotatable about the axis of rotation (58) of the turbine wheel (56).

10. Cleaning device in accordance with any one of the preceding claims, **characterized in that** the roller bearing is configured as ball bearing (68).

11. Cleaning device in accordance with any one of the preceding claims, **characterized in that** the roller bearing is configured as axial bearing.

12. Cleaning device in accordance with any one of the preceding claims, **characterized in that** the cleaning head (18) comprises two disc brushes (34, 36), the bristle discs (70) of which are rotatable in opposite directions.

## Revendications

1. Dispositif de nettoyage pour des systèmes photovoltaïques, comprenant une tête de nettoyage (18) pourvue d'au moins une brosse circulaire (34, 36), qui comporte un disque à poils (70) pouvant tourner autour d'un axe de rotation (58) et sur lequel des poils de nettoyage (72) sont agencés, et comprenant un dispositif d'entraînement qui comporte une roue de turbine (56) montée en rotation, qui peut être soumise à l'effet d'un liquide de nettoyage sous pression et qui est accouplée par une transmission (64) au disque à poils (70), **caractérisé en ce que** le dispositif de nettoyage (10) comprend un système de guidage télescopique (22) destiné à guider la tête de nettoyage (18), le liquide de nettoyage sous pression pouvant être amené par le système de guidage (22) à la ou aux brosses circulaires (34, 36), et **en ce que** la ou les brosses circulaires (34, 36) comprennent un carter d'entraînement (44) dans lequel la roue de turbine (56) est montée en rotation, et **en ce que** le disque à poils (70) est retenu sur une partie de support (66) qui est montée en rotation sur le carter d'entraînement (44) par l'intermédiaire d'un palier à roulement, la partie de support (66) comprenant une couronne à denture intérieure (86) qui s'engrène avec un pignon (82) de la transmission (64), et le palier à roulement entourant la couronne à denture intérieure (86).

2. Dispositif de nettoyage selon la revendication 1, **caractérisé en ce que** le système de guidage (22) comprend des barres de guidage (24, 25, 26, 27) rigides, pouvant être emboîtées les unes dans les autres.

3. Dispositif de nettoyage selon la revendication 1 ou 2, **caractérisé en ce qu'**une conduite d'amenée de liquide de nettoyage sous pression est guidée à travers le système de guidage (22).

4. Dispositif de nettoyage selon l'une quelconque des revendications précédentes, **caractérisé en ce qu'**un porte-brosse (20), sur lequel sont retenues la ou les brosses circulaires (34, 36), est agencé entre le système de guidage (22) et la tête de nettoyage (18).

5. Dispositif de nettoyage selon la revendication 4, **caractérisé en ce que** le porte-brosse (20) comprend un ensemble de conduites présentant une entrée (38) à laquelle peut être raccordée une conduite d'amenée pour le liquide de nettoyage sous pression, et au moins une sortie (40, 42) à laquelle peut être raccordée une brosse circulaire (34, 36), la ou les sorties (40, 42) pouvant pivoter par rapport à l'entrée (38) autour d'un axe de pivotement (96) orienté perpendiculairement à un axe longitudinal (92) du système de guidage (22).

6. Dispositif de nettoyage selon la revendication 5, **caractérisé en ce que** la ou les sorties (40, 42) peuvent pivoter à partir d'une première position finale uniquement dans un sens de pivotement autour de l'axe de pivotement (96).

7. Dispositif de nettoyage selon la revendication 6, **caractérisé en ce que** la ou les sorties (40, 42) peuvent pivoter à partir de la première position finale autour de l'axe de pivotement (96) selon un angle de pivotement de maximum 90°.

8. Dispositif de nettoyage selon l'une quelconque des revendications 5 à 7, **caractérisé en ce que** le porte-brosse (20) comprend une articulation (94) étanche au fluide par l'intermédiaire de laquelle l'entrée (38) est en liaison fluidique avec la ou les sorties (40, 42).

9. Dispositif de nettoyage selon l'une quelconque des revendications précédentes, **caractérisé en ce que** la partie de support (66) peut être amenée en rotation autour de l'axe de rotation (58) de la roue de turbine (56).

10. Dispositif de nettoyage selon l'une quelconque des revendications précédentes, **caractérisé en ce que** le palier de roulement est réalisé sous la forme d'un roulement à billes (68).

11. Dispositif de nettoyage selon l'une quelconque des revendications précédentes, **caractérisé en ce que** le palier à roulement est réalisé sous la forme d'un palier axial.

12. Dispositif de nettoyage selon l'une quelconque des revendications précédentes, **caractérisé en ce que** la tête de nettoyage (18) comprend deux brosses circulaires (34, 36) dont les disques à poils (70) peuvent être amenés en rotation dans des sens opposés.
